# EUROPEAN PATENT APPLICATION

(11) **EP 3 876 329 A1**
(43) Date of publication of application: **08.09.2021**
(21) Application number: 20174024.8
(22) Date of filing: 12.05.2020
(51) Int. Cl.: H01M 10/052, H01M 10/0569

(54) **ELECTROLYTE, ELECTROCHEMICAL DEVICE AND ELECTRONIC DEVICE**

(30) Priority: 03.03.2020 CN 202010140913
(71) Applicant: Ningde Amperex Technology Limited, Zhangwan Town, Jiaocheng Zone Ningde City Fujian 352100 (CN)
(72) Inventor: LI, Wenqiang, Ningde City Fujian Province, fujian 352100 (CN); ZHENG, Jianming, Ningde City Fujian Province, fujian 352100 (CN); CUI, Hui, Ningde City Fujian Province, Fujian 352100 (CN); ZHENG, Xiangling, Ningde City Fujian Province, fujian 352100 (CN)
(74) Representative: Invent Horizon IP

(57) **Abstract**

The present disclosure provides an electrolyte, and an electrochemical device and an electronic apparatus including the electrolytte. The electrolyte of the present disclosure includes lithium difluorophosphate and a compound containing (F)₂PO-. The electrolyte of the present disclosure can reduce a resistance of the electrochemical device while improving the high-temperature storage capacitance retention performance.

## Description

### CROSS-REFERENCE TO RELATED DISCLOSURES

The present application claims priority to Chinese Patent Application No. 202010140913.9, filed on March 03, 2020, the content of which is incorporated herein by reference in its entirety.

### TECHNICAL FIELD

The present disclosure relates to the field of electrochemical technology, and in particular, to an electrolyte, and an electrochemical device and an electronic apparatus using the electrolyte.

### BACKGROUND

With the popularization and application of mobile phones, laptops, cameras and other electronic products, electrochemical devices represented by lithium-ion batteries have also been widely used. The safety problems of using lithium-ion batteries in hostile environment have been the focus of peoples' attention, for example, whether it can be used normally at extreme low temperature, whether it can cause hazard during use at high temperatures, whether large-rate discharge is still possible, etc. Therefore, it is urgent to develop a lithium-ion battery that has good low temperature performance and high temperature performance.

### SUMMARY

In order to solve the problems in the related art, the present disclosure provides an electrolyte.

A first aspect of the present disclosure provides an electrolyte including lithium difluorophosphate (LiPO₂F₂) and a compound containing (F)₂PO-.

In some embodiments of the present disclosure, the compound containing (F)₂PO-is selected from compounds represented by Formula I:. 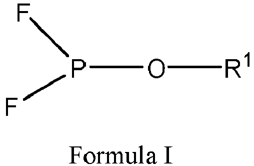 in which,
R¹ is selected from the group consisting of a substituted or unsubstituted C₁-C₁₀ alkyl and a substituted or unsubstituted C₂-C₁₀ unsaturated hydrocarbyl, wherein the substituent, if present, is selected from the group consisting of alkanoyl, cyano, halogen, and combinations thereof; or
R¹ is a group represented by the following formula: 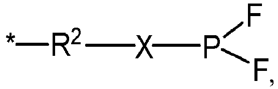
R² is selected from the group consisting of a single bond, a substituted or unsubstituted C₁-C₁₀ alkylene, and a substituted or unsubstituted C₂-C₁₀ unsaturated hydrocarbyl, wherein the substituent, if present, is halogen;
X is a single bond or an oxygen atom; and
* indicates a bonding position.

In some embodiments of the present disclosure, the compound containing (F)₂PO-comprises at least one of the following compounds: 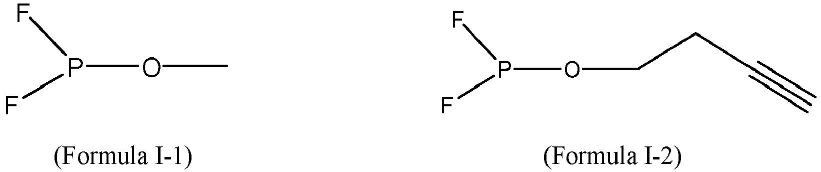 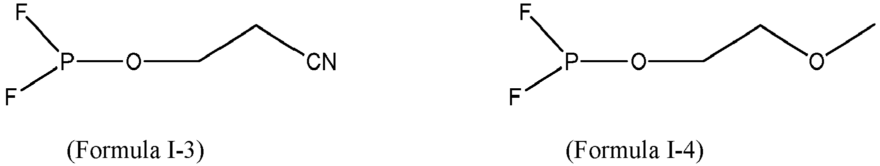 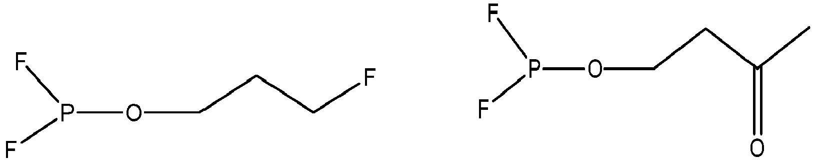 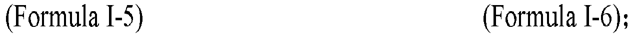 the compound containing (F)₂PO- includes at least one of the following compounds:

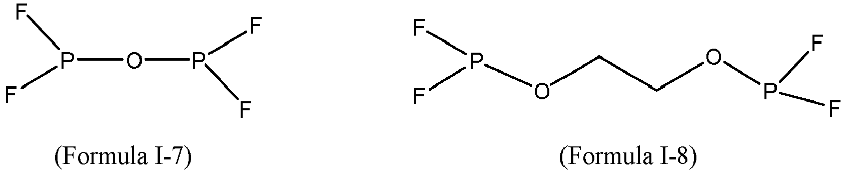

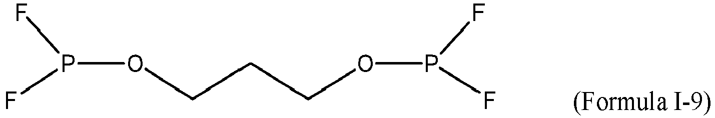

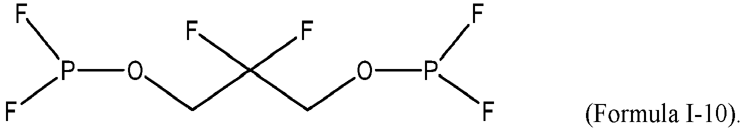

In some embodiments of the present disclosure, based on a total mass of the electrolyte, a mass percentage of the compound containing (F)₂PO- in the electrolyte is 0.001% to 5%.

In some embodiments of the present disclosure, based on a total mass of the electrolyte, the mass percentage of the compound containing (F)₂PO- in the electrolyte is 0.1% to 1%.

In some embodiments of the present disclosure, based on a total mass of the electrolyte, a mass content of the lithium difluorophosphate in the electrolyte is 0.001% to 1%.

In some embodiments of the present disclosure, based on a total mass of the electrolyte, a mass content of the lithium difluorophosphate in the electrolyte is 0.001% to 0.49%.

In some embodiments of the present disclosure, the electrolyte further includes a multiple-cyano compound, and the multiple-cyano compound includes at least one of the following compounds: 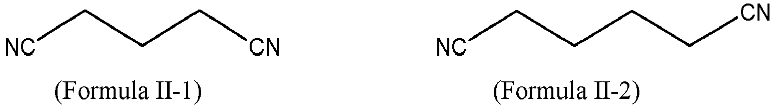 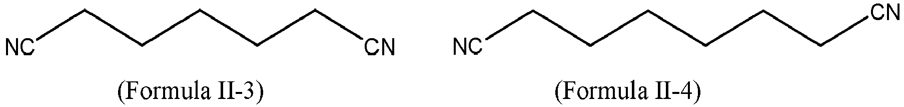 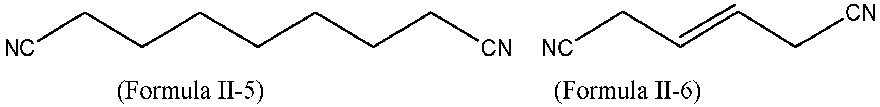 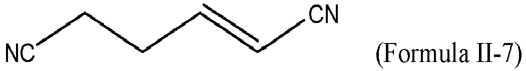 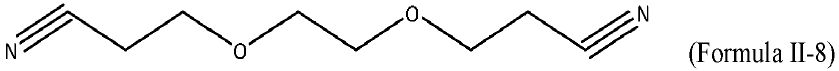 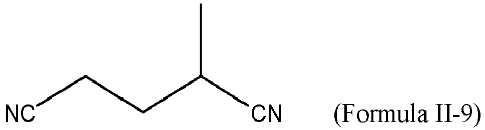 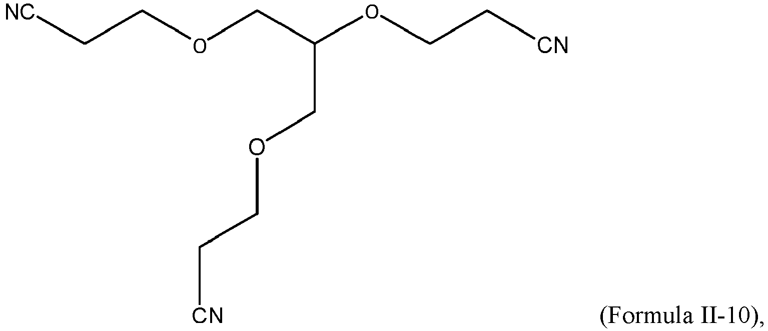 and
based on a total mass of the electrolyte, a mass percentage of the multiple-cyano compound in the electrolyte is 0.01% to 10%.

In some embodiments of the present disclosure, the electrolyte further includes a sultone compound, and the sultone compound includes a structure represented by Formula III-A or Formula III-B: 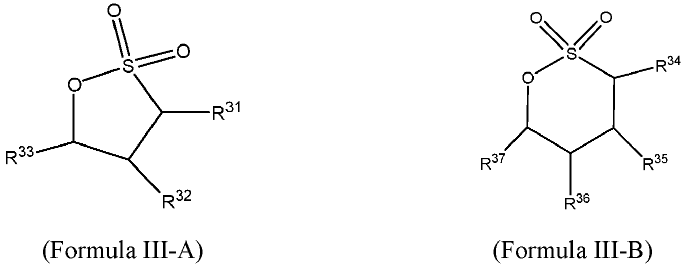 in which, R³¹, R³², R³³, R³⁴, R³⁵, R³⁶, and R³⁷ are each independently selected from the group consisting of H, F, Cl, Br, a substituted or unsubstituted C₁-C₆ alkyl, and a substituted or unsubstituted C₂-C₆ unsaturated hydrocarbyl, in which the substituent, if present, is selected from the group consisting of F, Cl, and Br, and
based on a total mass of the electrolyte, a mass percentage of the sultone compound in the electrolyte is 0.01% to 10%.

In some embodiments of the present disclosure, the sultone compound includes at least one of the following compounds:

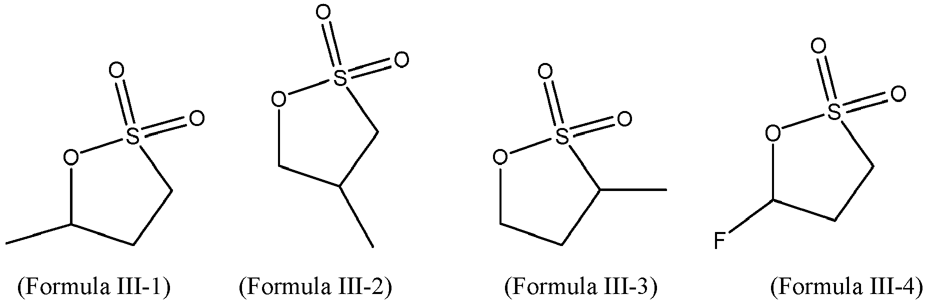

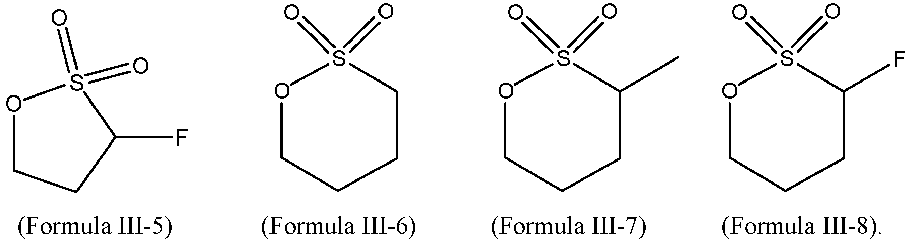

In some embodiments of the present disclosure, based on a total mass of the electrolyte , a mass percentage of the sultone compound in the electrolyte is 0.5% to 5%.

In some embodiments of the present disclosure, the electrolyte further includes a fluoroether compound, and the fluoroether compound is selected from the group consisting of selected from the group consisting of desflurane, sevoflurane, fluroxene, 2,2,2-trifluoroether, bis (fluoromethyl) ether, 2,2,3,3,3-pentafluoropropyl difluoromethyl ether, 2,2-difluoroethyl trifluoromethyl ether, 1,1,2,3,3,3-penta fluoropropyl 2,2,2-trifluoroethyl ether, heptafluoropropyl 1,2,2,2-tetrafluoroethyl ether, trifluoromethyl trifluorovinyl ether, 1,2,2,2-tetrafluoroethyl trifluoromethyl ether, 1,1,2,3,3,3-penta fluoropropyl difluoromethyl ether, 1,2,2-trifluoroethyl trifluoromethyl ether, 2,2,3,3-tetrafluoropropyl difluoromethyl ether, difluoromethyl 2,2,2-trifluoroethyl ether, 1,1-difluorodimethyl ether, trifluoromethyl methyl ether, 1,1,2,2-tetrafluoroethyl ethyl ether, 1,1,2,3,3,3-hexafluoropropyl methyl ether, 1,1,3,3-tetrafluorodimethyl ether, bis(4-fluorobutyl) ether, ethyl trifluoromethyl ether, 2,2,3,3,3-pentafluoropropyl methyl ether, methyl nonafluorobutyl ether, 1,2,2,2-tetrafluoroethyl methyl ether, pentafluorodimethyl ether, 1,1,2,3,3,3-penta fluoropropyl ethyl ether, bis(2,2-difluoroethyl) ether, ethyl perfluorobutyl ether, bis(1,2,2,2-tetrafluoroethyl) ether, 1,1,2,2-tetrafluoroethyl methyl ether, 2-fluoroethyl methyl ether, perfluorobutyl methyl ether, ethyl nonafluorobutyl ether, 2-(perfluoropropoxy)perfluoropropyl trifluorovinyl ether, 1,1,1,3,3,3-hexafluoroisopropyl methyl ether, 2,2,3,3-tetrafluoropropyl-1',1',2',3',3'-hexafluoropropyl ether, perfluorodiglyme, 2,2-difluoroethyl methyl ether, pentafluoroethyl trifluorovinyl ether, heptafluoro-n-propyl trifluorovinyl ether, pentafluoroethyl trifluorovinyl ether, allyl 2,2,3,3-tetrafluoropropyl ether, 2,2,2-trifluoroethyl ethyl ether, perfluoro(3-butenylvinylether), and combinations thereof.

In some embodiments of the present disclosure, a mass percentage of the fluoroether compound in the electrolyte is 0.1% to 20%, based on a total mass of the electrolyte.

In some embodiments of the present disclosure, a mass percentage of the fluoroether compound in the electrolyte is 0.5% to 10%, based on a total mass of the electrolyte.

Another aspect of the present disclosure provides an electrochemical device. The electrochemical device includes a positive electrode, a negative electrode, a separator disposed between the positive electrode and the negative electrode, and the electrode of the present disclosure.

In some embodiments of the present disclosure, the positive electrode includes a positive current collector and a positive active material layer disposed on the positive current collector, and the positive active material layer comprises a positive active material, a binder and a conductive agent.

In some embodiments of the present disclosure, the positive active material contains magnesium element, and a content of the magnesium element is m×10³ ppm based on a total weight of the positive active material layer, where m is in a range of 0.5 to 2.

In some embodiments of the present disclosure, a mass percentage of the lithium difluorophosphate in the electrolyte is a %, and a mass percentage of the compound containing (F)₂PO- in the electrolyte is b%, based on a total mass of the electrolyte, where (a+b)/m≤1.

An electronic apparatus, comprising the electrochemical device of the present disclosure.

The technical solutions provided by present disclosure at least has the following beneficial effects.

Compared with the related art, the additives of the electrolyte of the present disclosure include lithium difluorophosphate (LiPO₂F₂) and the compound containing (F)₂PO-, which can significantly reduce the resistance and improve a capacitance retention performance of the lithium ion battery during high-temperature storage. Therefore, an electrochemical device containing the electrolyte of the present disclosure has excellent performances in the low temperature environment and the high temperature environment.

### DESCRIPTION OF EMBODIMENTS

In order to clarify the purposes, technical solutions and advantages of the present disclosure, the technical solutions of the present disclosure is clearly and thoroughly described in combination with the embodiments of the present disclosure. The described embodiments are part of the embodiments rather than all the embodiments of the present disclosure. Based on the technical solutions and the embodiments provided in the present disclosure, all other embodiments obtained by those skilled in the art without paying creative work shall fall within the protection scope of the present disclosure.

A first aspect of the present disclosure provides an electrolyte including a lithium salt, an organic solvent and an additive. The additive includes lithium difluorophosphate (LiPO₂F₂) and a compound containing (F)₂PO-.

In the electrolyte of the present disclosure, the compound containing (F)₂PO- effects together with LiPO₂F₂ to reduce a resistance of an electrochemical device at 50% of state of charge and improve a high-temperature storage performance of the electrochemical device. The specific mechanism of such effects is not clear yet, it could be the follows: on the one hand, the combination of the two compounds may promote the increase of a LiF component in an organic protective film, and LiF has good stability, which will reduce further contact between other additives and the active material; and on the other hand, the combination of the two compounds may further enhance an interface stability and reduce a film formation of other additives, thereby reducing the thickness of the organic protective film and reducing the resistance. The LiF, which is rich in organic protective layer, has good stability at high temperature and thus can effectively prevent the side reaction between the active material and the electrolyte at high temperature, thereby improving a capacitance retention performance during high-temperature storage.

In some embodiments of the present disclosure, the compound containing (F)₂PO-is selected from the group consisting of compounds represented by Formula I: 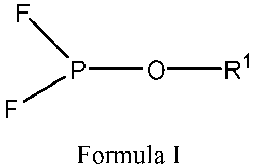
in which, R¹ is selected from the group consisting of a substituted or unsubstituted C₁-C₁₀ alkyl and a substituted or unsubstituted C₂-C₁₀ unsaturated hydrocarbyl, wherein the substituent, if present, is selected from the group consisting of alkanoyl, cyano, halogen, and combinations thereof; or
R¹ is a group represented by the following formula: 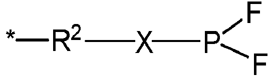
in which R² is selected from the group consisting of a single bond, a substituted or unsubstituted C₁-C₁₀ alkylene, and a substituted or unsubstituted C₂-C₁₀ unsaturated hydrocarbyl, wherein the substituent, if present, is halogen;
X is a single bond or an oxygen atom; and
* indicates a bonding position.

In some embodiments of the present disclosure, the compound containing (F)₂PO-includes at least one of the following compounds:

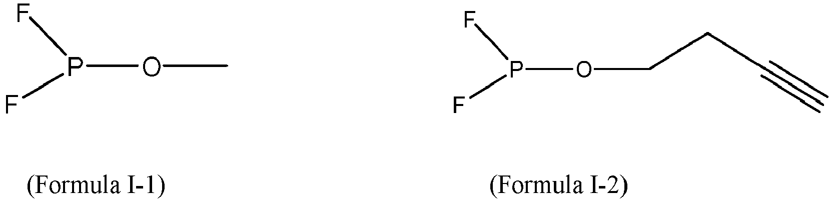

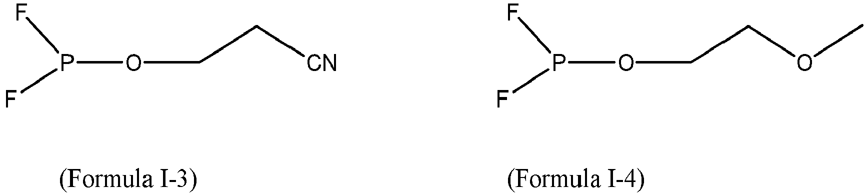

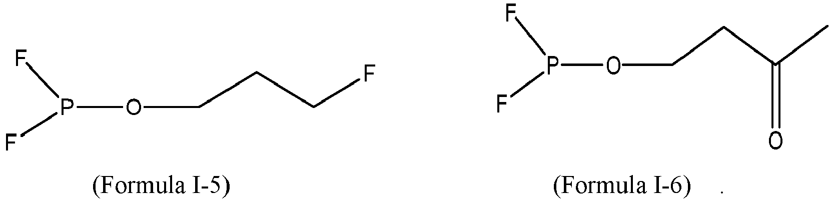

In some embodiments of the present disclosure, the compound containing (F)₂PO-includes at least one of the following compounds:

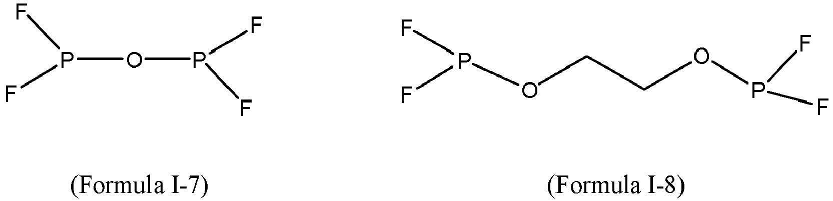

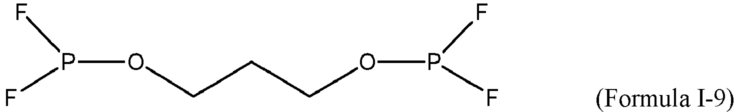

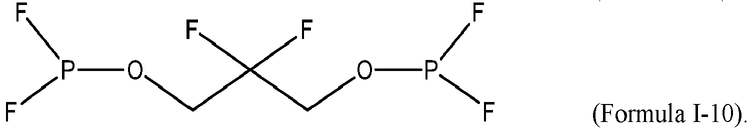

In some embodiments of the present disclosure, based on a total mass of the electrolyte, a mass percentage of the compound containing (F)₂PO- in the electrolyte is 0.001% to 5%. If the content of the compound containing (F)₂PO- in the electrolyte is too low, an efficient composite protective film cannot be formed. In contrast, the compound containing (F)₂PO- with a very high content may be not consumed timely, and may be decomposed at high temperature instead of participating in the film formation, thereby adversely influencing the high-temperature storage performance of the electrochemical device. In some embodiments of the present disclosure, based on the total mass of the electrolyte, the mass percentage of the compound containing (F)₂PO- in the electrolyte is 0.1% to 1%. The compound containing (F)₂PO- having the mass percentage in such a range can form the film with better performances. In the present disclosure, the mass percentage of the compound containing (F)₂PO- in the electrolyte is 4%, 3%, 2.5%, 2%, 1.5%, 1%, 0.8%, 0.5%, 0.3%, or in a range defined by any two of these values.

In some embodiments of the present disclosure, based on the total mass of the electrolyte, a mass content of lithium difluorophosphate in the electrolyte is 0.001% to 1%. In some embodiments of the present disclosure, based on the total mass of the electrolyte, the mass content of lithium difluorophosphate in the electrolyte is 0.001% to 0.49%. A too small content of the lithium difluorophosphate is unfavorable to the formation of the protective film. In contrast, if the content is too high, only a part of lithium difluorophosphate participates in the film formation, while the remaining lithium difluorophosphate may continue to react during storage, which may lead to a deterioration of the high-temperature storage performance.

In some embodiments of the present disclosure, the electrolyte further includes a multiple-cyano compound.

In some embodiments of the present disclosure, the multiple-cyano compound includes at least one of the following compounds:

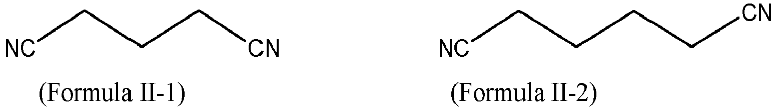

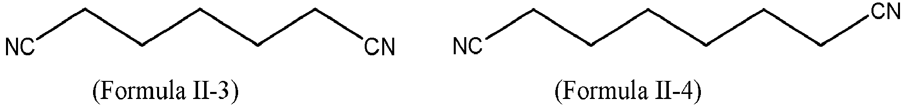

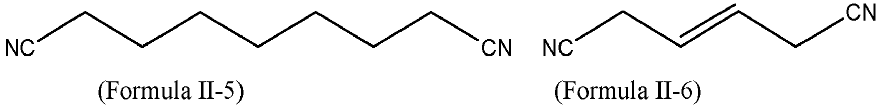

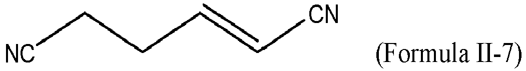

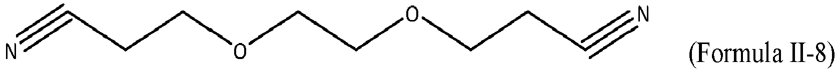

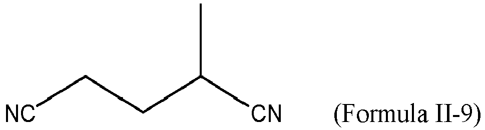

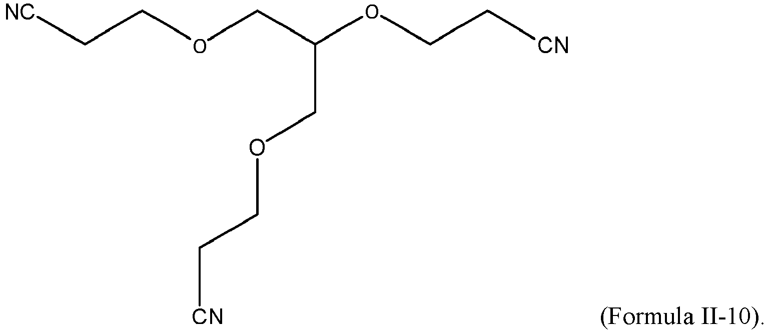

In some embodiments of the present disclosure, based on the total mass of the electrolyte, a mass percentage of the multiple-cyano compound in the electrolyte is 0.01% to 10%. Lithium difluorophosphate, the compound containing (F)₂PO-, and the multiple-cyano compound effect together to further protect the positive active material, reduce the contact between the electrolyte and the positive active material, and further reduce the resistance of the electrochemical device. When the content of the multiple-cyano compound is within the above range, a surface structure of the positive electrode can be effectively protected, without affecting a lithium ion transmission or leading to the deterioration of the resistance performance of the positive electrode. The mass percentage of the multiple-cyano compound in the electrolyte can be 10%, 8%, 7%, 5%, 4% , 3%, 2%, 1%, or in a range defined by any two of these values.

In some embodiments of the present disclosure, the electrolyte further includes a sultone compound.

In some embodiments of the present disclosure, the sultone compound includes a compound represented by Formula III-A, a compound represented by Formula III-B, or a combination thereof: 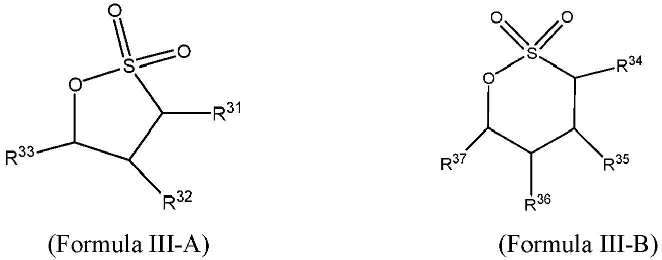 in which, R³¹, R³², R³³, R³⁴, R³⁵, R³⁶, R³⁷ are each independently selected from the group consisting of H, F, Cl, Br, a substituted or unsubstituted C1∼C6 alkyl, and a substituted or unsubstituted C2∼C6 unsaturated hydrocarbyl, in which the substituent, if present, is selected from the group consisting of F, Cl, and Br.

In some embodiments of the present disclosure, the sultone compound has a structure represented by any one of the following formulas:

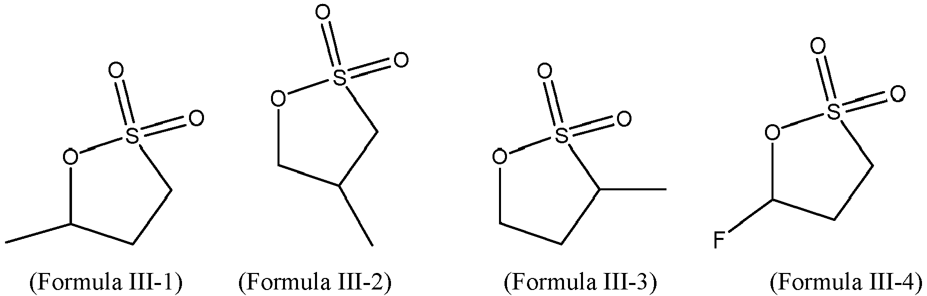

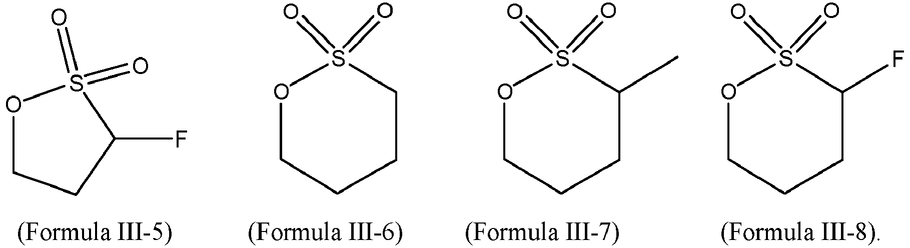

In some embodiments of the present disclosure, based on the total mass of the electrolyte, a mass percentage of the sultone compound in the electrolyte is 0.01% to 10%. In some embodiments of the present disclosure, based on the total mass of the electrolyte, the mass percentage of the sultone compound in the electrolyte is 0.5% to 5%. Lithium difluorophosphate, the compound containing (F)₂PO-, and the sultone compound effect together to form films on both the positive and negative electrodes, thereby improving high temperature performance of interface protective films of the positive and negative electrodes. When the content of the sultone compound is within the range, a better film formation effect is achieved. In some embodiments of the present disclosure, the mass percentage of the sultone compound in the electrolyte can be 10%, 8%, 7%, 5%, 4%, 3%, 2%, 1%, 0.8%, or in a range defined by any two of these values.

In some embodiments of the present disclosure, the electrolyte further includes a fluoroether compound. Lithium difluorophosphate, the compound containing (F)₂PO- and the fluoroether compound effect together to improve a voltage resistance of the electrolyte. In some embodiments of the present disclosure, the fluoroether compound is selected from the group consisting of desflurane, sevoflurane, fluroxene, 2,2,2-trifluoroether, bis (fluoromethyl) ether, 2,2,3,3,3-pentafluoropropyl difluoromethyl ether, 2,2-difluoroethyl trifluoromethyl ether, 1,1,2,3,3,3-penta fluoropropyl 2,2,2-trifluoroethyl ether, heptafluoropropyl 1,2,2,2-tetrafluoroethyl ether, trifluoromethyl trifluorovinyl ether, 1,2,2,2-tetrafluoroethyl trifluoromethyl ether, 1,1,2,3,3,3-penta fluoropropyl difluoromethyl ether, 1,2,2-trifluoroethyl trifluoromethyl ether, 2,2,3,3-tetrafluoropropyl difluoromethyl ether, difluoromethyl 2,2,2-trifluoroethyl ether, 1,1-difluorodimethyl ether, trifluoromethyl methyl ether, 1,1,2,2-tetrafluoroethyl ethyl ether, 1,1,2,3,3,3-hexafluoropropyl methyl ether, 1,1,3,3-tetrafluorodimethyl ether, bis(4-fluorobutyl) ether, ethyl trifluoromethyl ether, 2,2,3,3,3-pentafluoropropyl methyl ether, methyl nonafluorobutyl ether, 1,2,2,2-tetrafluoroethyl methyl ether, pentafluorodimethyl ether, 1,1,2,3,3,3-penta fluoropropyl ethyl ether, bis(2,2-difluoroethyl) ether, ethyl perfluorobutyl ether, bis(1,2,2,2-tetrafluoroethyl) ether, 1,1,2,2-tetrafluoroethyl methyl ether, 2-fluoroethyl methyl ether, perfluorobutyl methyl ether, ethyl nonafluorobutyl ether, 2-(perfluoropropoxy)perfluoropropyl trifluorovinyl ether, 1,1,1,3,3,3-hexafluoroisopropyl methyl ether, 2,2,3,3-tetrafluoropropyl-1',1',2',3',3'-hexafluoropropyl ether, perfluorodiglyme, 2,2-difluoroethyl methyl ether, pentafluoroethyl trifluorovinyl ether, heptafluoro-n-propyl trifluorovinyl ether, pentafluoroethyl trifluorovinyl ether, allyl 2,2,3,3-tetrafluoropropyl ether, 2,2,2-trifluoroethyl ethyl ether, perfluoro(3-butenylvinylether), and combinations thereof.

In some embodiments of the present disclosure, based on the total mass of the electrolyte, a mass percentage of the fluoroether compound in the electrolyte is 0.1% to 20%. In some embodiments of the present disclosure, based on the total mass of the electrolyte, the mass percentage of the fluoroether compound in the electrolyte is 0.5% to 10%. As the fluoroether compound contains a relatively large number of fluorine atoms, it may hinder the transmission of lithium ions in the electrolyte with an increasing content of fluorine atoms, so as to increase a polarization of the electrolyte. The increase in polarization then causes interface lithium precipitation during a charging process, which may lead to a deterioration of the performances of the electrochemical device. In some embodiments of the present disclosure, the mass percentage of the fluoroether compound in the electrolyte can be 20%, 15%, 10%, 5%, 4%, 3%, 2%, 1%, , or in a range defined by any two of these values.

In the present disclosure, the lithium salt is selected from the lithium salts that are commonly used in the related art. For example, the lithium salt is selected from the group consisting of LiPF₆, lithium bis(trifluoromethanesulphonyl)imide (LiTFSI), lithium bis(fluorosulfonyl)imide (LiFSI), lithium bis(oxalate)borate (LiBOB), lithium difluoro(oxalato)borate (LiDFOB), lithium tetrafluorooxalatophosphate (LiPF₄C₂O₄), lithium difluorobis(oxalato)phosphate (LiPF₂(C₂O₄)₂), lithium hexafluorophosphate (LiCsF₆), and combinations thereof. When LiPF₆ and other lithium salt are both used as the lithium salt, a mass percentage of LiPF₆ in the lithium salt is greater than 50%.

In the present disclosure, a concentration of the lithium salt in the electrolyte is 0.5 mol/L to 2 mol/L.

In the present disclosure, solvent is non proton organic solvent. In some embodiments of the present disclosure, the organic solvent includes at least one of a cyclic carbonate, a chain carbonate, a chain carboxylate, and a cyclic carboxylate. For example, the carbonate may be dimethyl carbonate (DMC), diethyl carbonate (DEC), dipropyl carbonate (DPC), methyl propyl carbonate (MPC), ethyl propyl carbonate (EPC), ethyl methyl carbonate (MEC), ethylene carbonate (EC), propylene carbonate (PC), butylene carbonate (BC), etc. The carboxylate may be, for example, methyl formate, ethyl formate, methyl acetate, ethyl acetate, n-propyl acetate, 1,1-dimethyl ethyl acetate, methyl propionate, ethyl propionate, methyl n-butyrate, propyl propionate, γ-butyrolactone, decalactone, valerolactone, mevalonolactone, caprolactone, etc.

In some embodiments of the present disclosure, the electrolyte further includes an ether solvent, a phosphorus-containing organic solvent, an aromatic fluorine-containing solvent, a ketone-based solvent, an alcohol-based solvent, or an aprotic solvent. The organic solvent may be used individually, or in a mixture. When a mixture of organic solvents is used, the mixing ratio is controlled according to the desired performances of the electrochemical device.

In some embodiments, the ether solvent may be a cyclic ether compound, including, but not limited to, tetrahydrofuran, 2-methyltetrahydrofuran, 1,3-dioxolane, 2-methyl-1,3-dioxolane, 4-methyl-1,3-dioxolane, 1,3-dioxane, 1,4-dioxane and dimethoxypropane. In some embodiments, based on the total mass of the electrolyte, a mass percentage of the cyclic ether in the electrolyte is greater than or equal to 0.1%. In some embodiments, based on the total mass of the electrolyte, the mass percentage of the cyclic ether in the electrolyte is greater than or equal 0.5%. In some embodiments, based on the total mass of the electrolyte, the mass percentage of the cyclic ether in the electrolyte is greater than or equal 2%. In some embodiments, based on the total mass of the electrolyte, the mass percentage of the cyclic ether in the electrolyte is smaller than or equal to 5%.

In some embodiments, the ether solvent is a chain ether compound, including, but not limited to, dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane and 1,2-ethoxymethoxyethane. In some embodiments, based on the total mass of the electrolyte, a mass percentage of the chain ether compound in the electrolyte is greater than 0.1%. In some embodiments, based on the total mass of the electrolyte, the mass percentage of the chain ether compound in the electrolyte is greater than or equal to 0.5%. In some embodiments, based on the total mass of the electrolyte, the mass percentage of the chain ether compound in the electrolyte is greater than or equal to 2%. In some embodiments based on the total mass of the electrolyte, the mass percentage of the chain ether compound in the electrolyte is greater than or equal to 3%. In some embodiments, based on the total mass of the electrolyte, the mass percentage of the chain ether compound in the electrolyte is smaller than or equal to 30%.

In some embodiments, the phosphorous-containing organic solvent includes, but is not limited to, trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate and tris(2,2,3,3,3-(pentafluoropropyl) phosphate. In some embodiments, based on the total mass of the electrolyte, a mass percentage of the phosphorous-containing organic solvent in the electrolyte is greater than or equal to 0.1%. In some embodiments, based on the total mass of the electrolyte, the mass percentage of the phosphorous-containing organic solvent in the electrolyte is greater than or equal to 0.5%. In some embodiments, based on the total mass of the electrolyte, the mass percentage of the phosphorous-containing organic solvent in the electrolyte is greater than or equal to 2%. In some embodiments, based on the total mass of the electrolyte, the mass percentage of the phosphorous-containing organic solvent in the electrolyte is greater than or equal to 3%. In some embodiments, based on the total mass of the electrolyte, the mass percentage of the phosphorous-containing organic solvent in the electrolyte is smaller than or equal to 8%.

In some embodiments, the aromatic fluorine-containing solvent includes, but is not limited to, fluorobenzene, difluorobenzene, trifluorobenzene, tetrafluorobenzene, pentafluorobenzene, hexafluorobenzene and trifluoromethylbenzene. In some embodiments, based on the total mass of the electrolyte, a mass percentage of the aromatic fluorine-containing solvent in the electrolyte is greater than or equal to 0.1%. In some embodiments, based on the total mass of the electrolyte, the mass percentage of the aromatic fluorine-containing solvent in the electrolyte is greater than or equal to 0.5%. In some embodiments, based on the total mass of the electrolyte, the mass percentage of the aromatic fluorine-containing solvent in the electrolyte is greater than or equal to 2%. In some embodiments, based on the total mass of the electrolyte, the mass percentage of the aromatic fluorine-containing solvent in the electrolyte is greater than or equal to 4%. In some embodiments, based on the total mass of the electrolyte, the mass percentage of the aromatic fluorine-containing solvent in the electrolyte is smaller than or equal to 8%.

Examples of the ketone-based solvent include cyclohexanone and the like.

Examples of the alcohol-based solvent include ethanol, isopropanol, etc. Examples of the aprotic solvent include mononitrile such as R-CN (where R is C₂-C₂₀ straight chain hydrocarbyl, branched chain hydrocarbyl or cyclic hydrocarbyl, which may include a double bond, an aromatic ring or an ether bond), amide such as dimethylformamide, dioxolane such as 1,3-dioxolane, sulfolane, etc.

Another aspect of the present disclosure provides an electrochemical device including a positive electrode, a negative electrode, a separator disposed between the positive electrode and the negative electrode, and the electrolyte of the present disclosure.

In the electrochemical device, the positive electrode includes a positive current collector and a positive active material layer disposed on the positive current collector. The positive active material layer includes a positive active material, a binder and a conductive agent. The positive active material includes a compound that can reversibly intercalate and deintercalate lithium ions. The positive active material can be a composite oxide, which contains lithium and at least one element of cobalt, manganese, or nickel. The positive active material is not limited to a specific type and may be selected according to the requirements. The positive active material may be selected from the group consisting of LiCoO₂ (LCO), a lithium nickel manganese cobalt ternary material (NCM), lithium iron phosphate, lithium manganite, or combinations thereof. These positive active materials may be used individually or in any combinations.

In some embodiments, the positive active material contains magnesium (Mg) element. A content of magnesium (Mg) is m×10³ppm, based on a total weight of the positive active material layer, where m is in a range of 0.5 to 2. A mass percentage of the lithium difluorophosphate in the electrolyte is denoted as a%, and a mass percentage of the compound containing (F)₂PO- in the electrolyte is denoted as b%, where (a+b)/m≤1.

In some embodiments, m can be 0.5, 0.7, 0.9, 1.1, 1.3, 1.5, 1.7, 1.9, 2, or in a range defined by any two of these values.

In some embodiments, (a+b)/m can be 1, 0.8, 0.6, 0.4, 0.2, 0.1, 0.005, or in a range defined by any two of these values.

The positive active material may have a coating layer on its surface, or be mixed with another compound with a coating layer. The coating layer may include a coating element compound selected from at least one of oxide of a coating element, hydroxide of a coating element, oxyhydroxide of a coating element, oxycarbonate of a coating element, or hydroxycarbonate of a coating element. The compound used for the coating layer may be amorphous or crystalline. The coating element contained in the coating layer may include Mg, Al, Co, K, Na, Ca, Si, Ti, V, Sn, Ge, Ga, B, As, Zr, or combinations thereof. The coating layer may be applied with any method, as long as the method does not adversely affect the performance of the positive active material. For example, the method may be a coating method known for those skilled in the art, such as spray coating, dip coating, etc.

The binder functions to improve a bonding between positive active material particles, as well as to improve a bonding between the positive active material and the current collector. For example, the binder can be, but not limited to, polyvinyl alcohol, hydroxypropyl cellulose, diacetyl cellulose, polyvinyl chloride, carboxylated polyvinyl chloride, polyvinyl fluoride, ethyleneoxy-containing polymer, polyvinylpyrrolidone, polyurethane, polytetrafluoroethylene, polyvinylidene fluoride, polyethylene, polypropylene, styrene-butadiene rubber, acrylic (acrylated) styrene-butadiene rubber, epoxy resin, nylon, etc.

The included conductive agent imparts the electrode with conductivity. The conductive agent may include any conductive material as long as it does not cause chemical changes. Examples of the conductive material include, but not limited to, carbon-based materials such as natural graphite, artificial graphite, carbon black, acetylene black, Ketjen black, carbon fiber, etc.; metal-based materials such as metal powder, metal fibers, etc., for example, including copper, nickel, aluminum, silver, etc.; conductive polymers such as polyphenylene derivatives; and mixtures thereof.

The current collector may be aluminum (Al), but is not limited thereto.

### Negative Electrode

The negative electrode includes a current collector and a negative active material layer disposed on the current collector. The negative active material layer includes a negative active material. The negative active material is not limited to a specific type and can be selected according to the requirements. For example, the negative active material is selected from the group consisting of natural graphite, artificial graphite, mesophase carbon microball (MCMB), hard carbon, soft carbon, silicon, silicon-carbon composite, Li-Sn alloy, Li-Sn-O alloy, Sn, SnO, SnO₂, spinel lithiated TiO₂-Li4Ti₅O1₂, Li-Al alloy, or a combination thereof. Non-limiting examples of the carbon materials include crystalline carbon, amorphous carbon, or mixtures thereof. The crystalline carbon may be amorphous, sheet-shaped, platelet-shaped, spherical, or fibrous natural graphite or artificial graphite. The amorphous carbon may be mesophase pitch carbide, calcined coke, etc.

The negative active material layer may further include a binder, and optionally include a conductive material. The binder functions to improve a bonding between particles of the negative active material, and also to improve a bonding between the negative active material and the current collector. Examples of the binder include, but not limited to, polyvinyl alcohol, hydroxymethyl cellulose, hydroxypropyl cellulose, diacetyl cellulose, polyvinyl chloride, carboxylated polyvinyl chloride, polyvinyl fluoride, ethyleneoxy-containing polymer, polyvinylpyrrolidone, polyurethane, polytetrafluoroethylene, polyvinylidene fluoride, polyethylene, polypropylene, styrene-butadiene rubber, acrylic (acrylated) styrene-butadiene rubber, epoxy resin, nylon, etc.

The included conductive material imparts the electrode with conductivity. The conductive material may include any conductive material as long as it does not cause chemical changes. Examples of the conductive material include, but not limited to, carbon-based materials such as natural graphite, artificial graphite, carbon black, acetylene black, Ketjen black, carbon fiber, etc.; metal-based materials such as metal powder, metal fibers, etc., for example, including copper, nickel, aluminum, silver, etc.; conductive polymers such as polyphenylene derivatives; and mixtures thereof.

The current collector may be selected from the group consisting of a copper foil, a nickel foil, a stainless steel foil, a titanium foil, a nickel foam, copper foam, a polymer substrate covered with conductive metal, and combinations thereof.

### Separator

In some embodiments, the electrochemical device of the present disclosure is provided with a separator disposed between the positive electrode and the negative electrode, in order to prevent short circuit. The material and shape of the separator used in the electrochemical device of the present disclosure are not particularly limited, and may be any known in the prior art. In some embodiments, the separator includes polymers or inorganic materials formed from materials that are stable to the electrolyte of the present disclosure.

For example, the separator may include a substrate layer and a surface treatment layer. The substrate layer is a non-woven fabric, a film or a composite film that have a porous structure, and the material of the substrate layer is selected from the group consisting of polyethylene, polypropylene, polyethylene glycol terephthalate, polyimide, and combinations thereof. For example, a porous polypropylene film, a porous polyethylene film, a polypropylene non-woven fabric, a polyethylene non-woven fabric or a porous polypropylene-polyethylene-polypropylene composite film can be selected.

The surface treatment layer is provided on at least one surface of the substrate layer. The surface treatment layer may be a polymer layer or an inorganic material layer, or a layer formed by mixing a polymer and an inorganic material.

The inorganic material layer may include inorganic particles and a binder. The inorganic particles may be selected from the group consisting of alumina, silica, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, barium sulfate, and combinations thereof. The binder may be selected from the group consisting of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, polyhexafluoropropylene, and combinations thereof.

The polymer layer contains a polymer that may be selected from the group consisting of polyamide, polyacrylonitrile, acrylate polymer, polyacrylic acid, polyacrylate salt, polyvinylpyrrolidone, polyvinyl ether, polyvinylidene fluoride, poly(vinylidene fluoride-hexafluoropropylene), and combinations thereof.

The technical solutions of the present disclosure are descried below in combination with specific examples.
1) Preparation of electrolyte: in an argon atmosphere glove box with a water content of <10ppm, ethylene carbonate (EC), diethyl carbonate (DEC), and propylene carbonate (PC) were mixed uniformly in a mass ratio of 2: 6: 2, and fully dried lithium salt LiPF6 was dissolved in the above solvent until the content of LiPF₆ was12.5%. This electrolyte is described as a basic electrolyte.

As shown in Table 1, a compound represented by Formula I and LiPO₂F₂ or a SEI film-forming additive were added to the basic electrolyte.

Examples of the compound represented by Formula I are listed as follows:

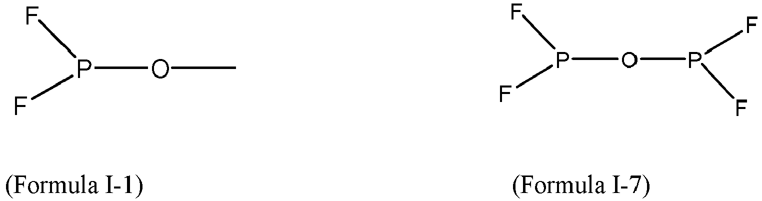

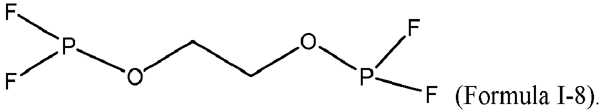

Examples of the multiple-cyano compound are listed as follows:

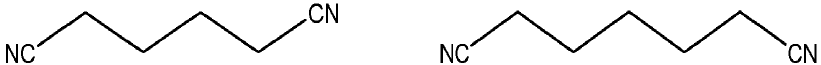

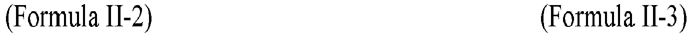

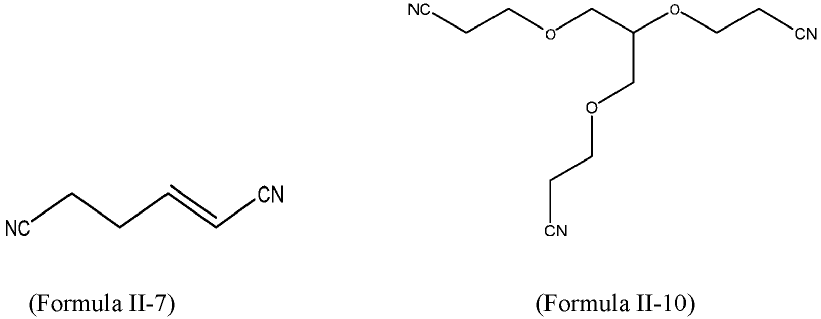

Examples of the sultone compound are listed as follows:

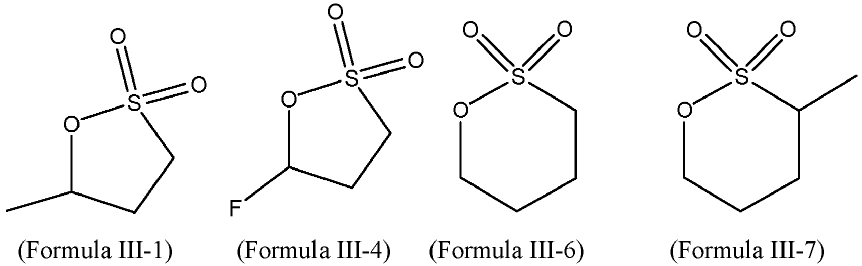

Examples of the fluoroether compound are listed as follows: 1,1,2,2-tetrafluoroethyl-2,2,3,3-tetrafluoropropyl ether, and 2,2-difluoroethyl trifluoromethyl ether.

### Preparation of lithium-ion battery

2) Preparation of positive active material
   The content of Mg element was 1000ppm, for example. Commercially purchased CoCl₂ and MgCl₂ were prepared into aqueous solutions, respectively, and then the aqueous solutions were mixed according to an active material molar ratio of 1: m, where 0≤m≤0.004027. NH₃.HCO₃ solution was added to adjust a pH value of the mixture to about 10.5, so as to obtain a precipitate. The obtained precipitate was calcined at 400°C for 5h to obtain Mg element-containing CO₃O₄. The obtained CO₃O₄ and Li₂CO₃ were mixed uniformly in a molar ratio of 2: 3.15, and then calcined at a temperature of 1000°C for 8h to obtain LiCoO₂. The obtained LiCoO₂ was added to MgO in a molar ratio of 1: (0.004027-m) and mixed uniformly, and the mixture was sintered at 800°C for 8h to obtain a final positive active material lithium cobaltate (molecular formula: LiCoO₂) containing Mg element. The positive active material lithium cobaltate contains Mg element,unless otherwise noted, in the following examples and comparative examples, the content of Mg element is 1000 ppm based on the total weight of the positive active material layer.
3) Preparation of positive electrode: the positive active material lithium cobaltate (molecular formula: LiCoO₂), a conductive agent acetylene black, and a binder polyvinylidene fluoride (PVDF) were thoroughly stirred and mixed in a weight ratio of 96: 2: 2 in an appropriate amount of N-methylpyrrolidone (NMP) solvent to form a uniform positive electrode slurry. This slurry was coated on an aluminum foil, as a positive electrode current collector, then dried, and cold pressed to obtain a positive active material layer. Then, after cutting and tab welding, a positive electrode was obtained.
4) Preparation of negative electrode: a negative active material graphite, a conductive agent acetylene black, a binder styrene-butadiene rubber (SBR), and a thickener sodium carboxymethyl cellulose (CMC) were thoroughly stirred and mixed in a weight ratio of 95: 2: 2: 1 in an appropriate amount of deionized water solvent, so as to form a uniform negative electrode slurry. The slurry was coated on a copper foil, as a negative current collector, then dried, and cold-pressed to obtain a negative active material layer. Then, after cutting and tab welding, a negative electrode was obtained.
5) Separator: a porous PE polymer film was used as the separator.
6) Preparation of lithium ion batteries: the positive electrode, the separator, and the negative electrode were stacked in such a manner that the separator was located between the positive electrode and the negative electrode to play a role of isolation, then wound and placed in an outer packaging foil. The battery was then dried and injected with the prepared electrolyte. Then, the battery was then vacuum sealed, after standing, formation and shaping, the preparation of the lithium-ion battery was finished.

### Test 1: resistance test at a 50% SOC

At 25°C, the battery was discharged with a current of 0.5C to 3.0V, rested for 5 minutes, and then charged to 4.45V with a current of 0.5C, and to 0.025C under a constant voltage 4.45V After 5 minutes of inactivity, the battery was discharged to 3.4V with a current of 0.1C, and the released capacitance was recorded as Ci. The battery was charged to 4.45V with a capacitance of 0.5Ci, then to 0.025Ci under a constant voltage 4.45V, rested for 5 minutes, and discharged with a current of 0.1C₁ for 5h, and the voltage of the battery at this time was recorded as Vi. Then, the battery was discharged with a current of 1C for 1 second, and the voltage at the end of the discharge was recorded as V₂. The resistance at 50% SOC was calculated according to a calculation formula: (V₁-V₂)/(1C-0.1C₁).

### Test 2: storage capacitance retention rate

At 25°C, the battery was discharged to 3.0 V with a current of 0.5C, rested for 5min, then charged to 4.45V with a current of 0.5C, charged to 0.025C under a constant voltage of 4.45V, rested for 5min, and then discharged to 3.0V with a current of 0.5C, and the capacitance released at this time was recorded as Ci. The battery was charged to 4.45V with a current of 0.5C, then charged to 0.025C under a constant voltage of 4.45V, placed in a 70°C oven and stored at 70°C for 24h. After 24 hours, the battery was taken out and discharged at a current of 0.5C to 3.0V at a temperature of 25°C, and the discharged capacitance was recorded as C₂. The capacitance retention rate after storage at 70°C for 24h was calculated according to a calculation formula: (C₂/C₁) × 100%.

### Test 3: hot box test

At 25°C, the battery was discharged to 3.0V with a current of 0.5C, rested for 5min, then charged to 4.45V with a current of 0.5C, and then charged to 0.05C under a constant voltage of 4.45V Then, the battery was placed in a high temperature box which was heated to 130°C with a rate of 5±2°C/min, and was kept at a constant temperature of 130°C for 60 minutes. If the fire breaking and explosion of the battery did not occur, then it was recorded as passed. 10 lithium-ion batteries were tested, and the number of batteries passing the test was recorded.

### Test 4: cycle test at 45°C

At 45°C, the battery was discharged to 3.0V with a current of 0.5C, rested for 5min, then charged to 4.45V with a current of 0.5C, and then charged to 0.05C under a constant voltage of 4.45V, which was one cycle. Such a charging and discharging process was repeated 800 times at the temperature of 45°C. The capacitance discharged in the first cycle was recorded as Ci, the capacitance discharged in the 500^{th} cycle was recorded as C₅₀₀, and the capacitance retention rate was calculated according to a calculation formula: (C₁/C₅₀₀) × 100%.

### Test 5: test of Mg element content

The battery was discharged to 2.8V with a current of 0.5C, rested for 5 minutes, discharged with a current of 0.05C to 2.8V, rested for 5 minutes, discharged with 0.01C to 2.8V, rested for 5 minutes, and discharged three times with a current of 0.01C. The battery was disassembled by hands wearing clean gloves, and the positive electrode and the negative electrode were carefully separated from each other until they had no mutual contact. In a glove box, the positive electrode was soaked in high-purity dimethyl carbonate (DMC, purity ≥ 99.99%) for 10 minutes, and then taken out and air dried for 30 minutes. Amount of DMC was greater than 15mL/1540mm² of disc area. In the dry environment, a ceramic spatula was used to scrape powder of more than 0.4g and then the powder was wrapped with a weighing paper. The powder was weighed by using an electronic balance with an accuracy of 0.0001g, and recorded as a sample weight: d, where d≤0.4g. Then, the powder was slowly added in a digestion tank containing 10mL of aqua regia, which was formed by the concentrated nitric acid and the concentrated hydrochloric acid in a mass ratio of 1: 1, the sample attached on the inner wall was flushed to the bottom of the tank, and the digestion tank was gently shaken. The water droplets outside the digestion tank were wiped off with dust-free paper, and the digestion device was assembled and placed in a microwave digestion apparatus for digestion. The digestion tank was disassembled, the lid was rinsed with ultrapure water 2-3 times, and the rinse solution was poured into the digestion tank. The sample solution was slowly shaken, and slowly poured into a volumetric flask through a funnel, and the digestion tank was rinsed 3 times to a volume of 100ml and homogenously shaken. The sample was tested with a plasma emission spectrometer (ICP) using the standard curve method. The concentration of the test sample was recorded as ρ₂g/ml. The content of Mg element was calculated as: (ρ₂×100)/d.

The electrolytes and lithium ion batteries of Examples 1.1-1.33 and Comparative Examples 1.1-1.3 were prepared according to the above preparation methods; and the additives in the electrolytes and their respective addition amounts are shown in Table 1.

**Table 1: Examples 1.1-1.33 and Comparative Examples 1.1-1.3**

| Examples | Compound represented by Formula I (%) | | | LiPO₂F₂ (%) | 50%SOC DCR(mΩ) | 70°C-24h Capacitance retention rate (%) |
|---|---|---|---|---|---|---|
| | I-1 | I-7 | I-8 | | | |
| Example 1.1 | 0.1 | - | - | 0.2 | 60.0 | 87.90% |
| Example 1.2 | 0.3 | - | - | 0.2 | 57.0 | 88.60% |
| Example 1.3 | 0.5 | - | - | 0.2 | 56.8 | 88.70% |
| Example 1.4 | 1 | - | - | 0.2 | 57.1 | 88.70% |
| Example 1.5 | 2 | - | - | 0.2 | 57.0 | 88.70% |
| Example 1.6 | 3 | - | - | 0.2 | 57.2 | 88.80% |
| Example 1.7 | 5 | - | - | 0.2 | 57.3 | 88.80% |
| Example 1.8 | - | 0.1 | - | 0.2 | 59.9 | 88.00% |
| Example 1.9 | - | 0.3 | - | 0.2 | 56.9 | 88.70% |
| Example 1.10 | - | 0.5 | - | 0.2 | 56.7 | 88.80% |
| Example 1.11 | - | 1 | - | 0.2 | 57.0 | 88.80% |
| Example 1.12 | - | 2 | - | 0.2 | 56.9 | 88.80% |
| Example 1.13 | - | 3 | - | 0.2 | 57.1 | 88.90% |
| Example 1.14 | - | 5 | - | 0.2 | 57.2 | 88.90% |
| Example 1.15 | - | - | 0.001 | 0.2 | 61.1 | 87.00% |
| Example 1.16 | - | - | 0.05 | 0.2 | 60.1 | 87.80% |
| Example 1.17 | - | - | 0.1 | 0.2 | 59.9 | 88.10% |
| Example 1.18 | - | - | 0.3 | 0.2 | 56.9 | 88.80% |
| Example 1.19 | - | - | 0.5 | 0.2 | 56.7 | 88.90% |
| Example 1.20 | - | - | 1 | 0.2 | 57.0 | 89.00% |
| Example 1.21 | - | - | 2 | 0.2 | 56.9 | 89.00% |
| Example 1.22 | - | - | 3 | 0.2 | 57.1 | 89.00% |
| Example 1.23 | - | - | 5 | 0.2 | 57.2 | 89.10% |
| Example 1.24 | - | - | 0.3 | 0.001 | 60.0 | 87.00% |
| Example 1.25 | - | - | 0.3 | 0.01 | 59.0 | 87.60% |
| Example 1.26 | - | - | 0.3 | 0.05 | 58.5 | 87.90% |
| Example 1.27 | - | - | 0.3 | 0.1 | 58.0 | 88.00% |
| Example 1.28 | - | - | 0.3 | 0.15 | 57.2 | 88.60% |
| Example 1.29 | - | - | 0.3 | 0.3 | 56.0 | 91.00% |
| Example 1.30 | - | - | 0.3 | 0.5 | 56.2 | 90.10% |
| Example 1.31 | - | - | 0.3 | 0.7 | 56.3 | 90.10% |
| Example 1.32 | - | - | 0.3 | 0.8 | 56.3 | 90.20% |
| Example 1.33 | - | - | 0.3 | 1 | 56.2 | 90.20% |
| Comparative Example 1.1 | - | - | - | - | 75.0 | 78.10% |
| Comparative Example 1.2 | - | - | 0.3 | - | 70.0 | 82.70% |
| Comparative Example 1.3 | - | - | - | 0.3 | 69.2 | 83.40% |

It can be seen from Examples 1.1-1.22 that the compounds I-1, I-7, and 1-8 have a significant effect on reducing of the resistance and increasing the storage capacitance retention rate. Regarding Examples 1.22-1.33, it can be seen that with an increase in the content of LiPO₂F₂, the resistance (DCR) is significantly reduced, and the storage capacitance retention rate is significantly increased. Through a comparison analysis between Examples 1.1-1.33 and Comparative Examples 1.1-1.3, the simultaneous addition of the compound represented by Formula I and LiPO₂F₂ can reduce the resistance of the battery, and significantly improve the storage capacitance retention rate.

The multiple-cyano compound has the effect of enhancing the interfacial stability of the positive electrode. The LiF component formed by the compound containing (F)₂PO- and LiPO₂F₂ reduces the contact between the active material and the electrolyte, but has a relatively weak effect on the dissolution of the transition metal. The multiple-cyano compound stabilizes the transition metal of the positive electrode through adsorption effect, and thus has a significant effect on reducing the dissolution of high-valent transition metals. The combination of these two compounds will further reduce the side reactions at high temperature and pressure, and further enhance the storage capacitance retention rate of the battery. Such effects can be demonstrated by the examples listed in Table 2.

**Table 2: Example 1.29 and Examples 2.1-2.24**

| Example | I-8 (%) | LiPO₂F₂ (%) | Multiple-cyano compound (%) | | | | 70°C-24h Capacitance retention rate (%) |
|---|---|---|---|---|---|---|---|
| | | | II-2 | II-3 | II-7 | II-10 | |
| Example 1.29 | 0.3 | 0.3 | - | - | - | - | 91.00% |
| Example 2.1 | 0.3 | 0.3 | 0.5 | - | - | - | 91.50% |
| Example 2.2 | 0.3 | 0.3 | 1 | - | - | - | 92.00% |
| Example 2.3 | 0.3 | 0.3 | 3 | - | - | - | 93.00% |
| Example 2.4 | 0.3 | 0.3 | 5 | - | - | - | 93.30% |
| Example 2.5 | 0.3 | 0.3 | 7 | - | - | - | 93.40% |
| Example 2.6 | 0.3 | 0.3 | 10 | - | - | - | 93.50% |
| Example 2.7 | 0.3 | 0.3 | - | 0.01 | - | - | 91.20% |
| Example 2.8 | 0.3 | 0.3 | - | 0.5 | - | - | 91.70% |
| Example 2.9 | 0.3 | 0.3 | - | 1 | - | - | 92.50% |
| Example 2.10 | 0.3 | 0.3 | - | 3 | - | - | 93.40% |
| Example 2.11 | 0.3 | 0.3 | - | 5 | - | - | 93.70% |
| Example 2.12 | 0.3 | 0.3 | - | 7 | - | - | 93.80% |
| Example 2.13 | 0.3 | 0.3 | - | 10 | - | - | 93.90% |
| Example 2.14 | 0.3 | 0.3 | - | - | 0.5 | - | 92.00% |
| Example 2.15 | 0.3 | 0.3 | - | - | 1 | - | 93.00% |
| Example 2.16 | 0.3 | 0.3 | - | - | 2 | - | 93.50% |
| Example 2.17 | 0.3 | 0.3 | - | - | - | 0.5 | 92.30% |
| Example 2.18 | 0.3 | 0.3 | - | - | - | 1 | 93.10% |
| Example 2.19 | 0.3 | 0.3 | - | - | - | 2 | 93.80% |
| Example 2.20 | 0.3 | 0.3 | - | - | - | 3 | 94.00% |
| Example 2.21 | 0.2 | 0.3 | 3 | - | - | - | 92.90% |
| Example 2.22 | 0.1 | 0.2 | - | 3 | - | - | 89.80% |
| Example 2.23 | 0.2 | 0.4 | - | | 1 | - | 91.80% |
| Example 2.24 | 0.3 | 0.2 | - | | - | 3 | 92.80% |

According to a comparison analysis of Example 1.29 and Examples 2.1-2.24, it is obvious that the solution of the electrolyte is further improved by adding the multiple-cyano compound, and the storage capacitance retention rate is further enhanced.

The compound containing (F)₂PO-, LiPO₂F₂ and the sultone compound functions together. The sultone compound can form an organic protective film containing organic sulfuric acid through a ring-opening reaction in the battery. The protective film has excellent high-temperature resistance and can further transform and increase the LiS and lithium sulfonate components in the organic protective film at high temperatures. In this way, the storage capacitance retention rate and the hot box performance of the battery can be enhanced at the same time, as demonstrated by the examples listed in Table 3.

**Table 3: Example 1.29 and Examples 3.1-3.22**

| Example | I-8 (%) | LiPO₂F₂ (%) | Sultone compound (%) | | | | 70°C-24h Capacitance retention rate | The number of batteries that have passed the hot box test |
|---|---|---|---|---|---|---|---|---|
| | | | III-1 | III-4 | III-6 | III-7 | (%) | |
| Example 1.29 | 0.3 | 0.3 | - | - | - | - | 91.00% | 8 |
| Example 3.1 | 0.3 | 0.3 | 0.5 | - | - | - | 92.00% | 10 |
| Example 3.2 | 0.3 | 0.3 | 1 | - | - | - | 92.50% | 10 |
| Example 3.3 | 0.3 | 0.3 | 3 | - | - | - | 92.70% | 10 |
| Example 3.4 | 0.3 | 0.3 | 5 | - | - | - | 92.80% | 10 |
| Example 3.5 | 0.3 | 0.3 | 7 | - | - | - | 92.90% | 10 |
| Example 3.6 | 0.3 | 0.3 | 10 | - | - | - | 93.00% | 10 |
| Example 3.7 | 0.3 | 0.3 | - | 0.5 | - | - | 92.10% | 10 |
| Example 3.8 | 0.3 | 0.3 | - | 1 | - | - | 92.70% | 10 |
| Example 3.9 | 0.3 | 0.3 | - | 3 | - | - | 92.90% | 10 |
| Example 3.10 | 0.3 | 0.3 | - | 5 | - | - | 93.00% | 10 |
| Example 3.11 | 0.3 | 0.3 | - | 7 | - | - | 93.10% | 10 |
| Example 3.12 | 0.3 | 0.3 | | 10 | - | - | 93.20% | 10 |
| Example 3.13 | 0.3 | 0.3 | - | - | 0.5 | - | 92.50% | 10 |
| Example 3.14 | 0.3 | 0.3 | - | - | 1 | - | 93.00% | 10 |
| Example 3.15 | 0.3 | 0.3 | - | - | 3 | - | 93.20% | 10 |
| Example 3.16 | 0.3 | 0.3 | - | - | - | 0.5 | 92.40% | 10 |
| Example 3.17 | 0.3 | 0.3 | - | - | - | 1 | 93.00% | 10 |
| Example 3.18 | 0.3 | 0.3 | - | - | - | 3 | 93.10% | 10 |
| Example 3.19 | 0.2 | 0.3 | 3 | - | - | - | 92.50% | 10 |
| Example 3.20 | 0.1 | 0.2 | | 3 | - | - | 89.20% | 10 |
| Example 3.21 | 0.2 | 0.4 | - | - | 1 | - | 92.80% | 10 |
| Example 3.22 | 0.3 | 0.2 | - | - | - | 1 | 90.10% | 10 |

By comparing Example 1.29 with Examples 31-3.22, it can be found that addition of the sultone compound can significantly improve the hot box pass rate, and the capacitance retention rate is further enhanced after the sultone compound was added.

The compound containing (F)₂PO-, LiPO₂F₂ and a fluoroether compound can effect together to improve the oxidation resistance of the electrolyte. During a long-term high temperature and high pressure cycle test, the oxidative decomposition of the electrolyte was reduced, and the by-products such as HF, which are generated due to the decomposition of the electrolyte, were also reduced. Therefore, the damages of the by-products to the active material and the organic protective film are reduced. The LiF-rich protective film, which is formed in combination with I and LiPO₂F₂, has a dual protection effect on improving the high-temperature cycle performance of the battery, as demonstrated through the examples listed in Table 4.

**Table 4: Example 1.29 and Examples 4.1-4.14**

| Example | I-8 (%) | LiPO₂F₂ (%) | Fluorine-containing ether (%) | | 70°C-24h Capacitance retention rate (%) | 45°C-500 els |
|---|---|---|---|---|---|---|
| | | | 1,1,2,2-tetrafluoroethyl-2,2,3,3-tetrafluoropropyl ether | ethane,1,1-difluoro-2-(trifluoromethoxy)- | | |
| Example 1.29 | 0.3 | 0.3 | - | - | 91.00% | 85.40% |
| Example 4.1 | 0.3 | 0.3 | 1 | - | 91.40% | 86.80% |
| Example 4.2 | 0.3 | 0.3 | 5 | - | 91.50% | 88.80% |
| Example 4.3 | 0.3 | 0.3 | 10 | - | 91.60% | 88.90% |
| Example 4.4 | 0.3 | 0.3 | 15 | - | 91.70% | 88.90% |
| Example 4.5 | 0.3 | 0.3 | 20 | - | 91.80% | 89.00% |
| Example 4.6 | 0.3 | 0.3 | - | 1 | 91.20% | 86.90% |
| Example 4.7 | 0.3 | 0.3 | - | 5 | 91.30% | 88.90% |
| Example 4.8 | 0.3 | 0.3 | - | 10 | 91.50% | 89.00% |
| Example 4.9 | 0.3 | 0.3 | - | 15 | 91.60% | 89.10% |
| Example 4.10 | 0.3 | 0.3 | - | 20 | 91.70% | 89.20% |
| Example 4.11 | 0.2 | 0.3 | 5 | - | 91.00% | 88.60% |
| Example 4.12 | 0.1 | 0.2 | 5 | - | 90.00% | 88.20% |
| Example 4.13 | 0.2 | 0.4 | - | 5 | 91.30% | 88.80% |
| Example 4.14 | 0.3 | 0.2 | - | 5 | 91.20% | 88.50% |

With reference to Example 1.29 and Examples 4.1-4.14, it can be seen that addition of the fluoroether compound significantly improves the cycle capacitance retention rate of the battery at 45°C.

Magnesium (Mg) element in the positive electrode material may occupy the lattice of the positive electrode material and has effect on maintaining the stability of the positive electrode material. In a delithium state of the positive electrode, the crystal lattice of the lithium cobaltate may change, which reduces the stability, and the crystal lattice is not as stable as none delithium state.. Magnesium can enhance the structure stability of the positive electrode material, the organic protective film formed by lithium difluorophosphate and difluorophosphine reduces the contact between the electrolyte and the positive electrode material, and the LiF-rich protective film enhances the acid resistance of the surface of the positive electrode material, as demonstrated through the examples in Table 5.

**Table 5: Example 1.29 and Examples 5.1-5.13**

| Example | I-8 (%) | LiPO₂F₂ (%) | Mg (1000ppm) | 70°C-24h Capacitance retention rate (%) |
|---|---|---|---|---|
| Example 1.29 | 0.3 | 0.3 | 1 | 91.00% |
| Example 5.1 | 0.3 | 0.3 | 0.7 | 90.00% |
| Example 5.2 | 0.3 | 0.3 | 0.8 | 90.20% |
| Example 5.3 | 0.3 | 0.3 | 0.9 | 90.60% |
| Example 5.4 | 0.3 | 0.3 | 1.2 | 91.70% |
| Example 5.5 | 0.3 | 0.3 | 1.3 | 92.50% |
| Example 5.6 | 0.3 | 0.3 | 1.5 | 92.30% |
| Example 5.7 | 0.3 | 0.3 | 1.7 | 92.40% |
| Example 5.8 | 0.3 | 0.3 | 1.9 | 92.60% |
| Example 5.9 | 0.2 | 0.3 | 1.2 | 91.60% |
| Example 5.10 | 0.1 | 0.3 | 0.9 | 90.20% |
| Example 5.11 | 0.5 | 0.3 | 1.2 | 92.40% |
| Example 5.12 | 0.1 | 0.2 | 1.2 | 90.00% |
| Example 5.13 | 0.2 | 0.4 | 1.2 | 91.30% |

With reference to Example 1.29 and Examples 5.1-5.13, it is obvious that the Mg element can improve the storage capacitance retention rate by stabilizing the internal structure of the positive electrode material.

As a further improvement of the solutions of the present disclosure, by adding a combination of the multiple-cyano compound, the sultone compound, and the fluoroether compound, the storage capacitance retention rate, as well as the cycle performance and the hot box performance are all improved, as demonstrated through Example 1.27 and Examples 6.1-6.6 in Table 6-1.

**Table 6-1: Example 1.29 and Examples 6.1-6.6**

| Example | I-8 (%) | LiPO₂F₂ (%) | II-3 (%) | II-10 (%) | III-1 (%) | 1,1,2,2-tetrafluoroethyl-2,2,3,3-tetrafluoropropyle ther (%) | Mg (100pp m) |
|---|---|---|---|---|---|---|---|
| Example 1.29 | 0.3 | 0.3 | - | - | - | - | 1 |
| Example 6.1 | 0.3 | 0.3 | 3 | - | 3 | - | 1 |
| Example 6.2 | 0.3 | 0.3 | - | 2 | 3 | 5 | 1 |
| Example 6.3 | 0.2 | 0.4 | - | 2 | 3 | - | 1.2 |
| Example 6.4 | 0.1 | 0.3 | - | 2 | 3 | 5 | 1.2 |
| Example 6.5 | 0.1 | 0.2 | 3 | 1 | 3 | - | 1 |
| Example 6.6 | 0.2 | 0.3 | 3 | 1 | 3 | 5 | 1.2 |

Test resulted are shown in Table 6-2

**Table 6-2: Test results of Example 1.29 and Examples 6.1-6.6**

| Example | 50%SOC DCR(mΩ) | 70°C-24h Capacitance retention rate (%) | The number of batteries that have passed the hot box test | 45°C-500 cls |
|---|---|---|---|---|
| Example 1.29 | 56.0 | 91.00% | 8 | 85.40% |
| Example 6.1 | 56.3 | 94.00% | 10 | 86.10% |
| Example 6.2 | 56.8 | 94.50% | 10 | 89.60% |
| Example 6.3 | 56.8 | 94.60% | 10 | 89.30% |
| Example 6.4 | 57.2 | 95.20% | 10 | 89.20% |
| Example 6.5 | 57.8 | 95.00% | 10 | 89.0% |
| Example 6.6 | 58.0 | 95.50% | 10 | 90.0% |

It can be seen from Table 6-1 and Table 6-2 that all the multiple-cyano compound, the sultone compound, the fluoroether compound, and the Mg element in the positive electrode material can improve the storage capacitance retention rate and the cycle performance.

## Claims

1. An electrolyte, comprising lithium difluorophosphate and a compound containing (F)₂PO-.

2. The electrolyte according to claim 1, wherein the compound containing (F)₂PO- is selected from compounds represented by Formula I: 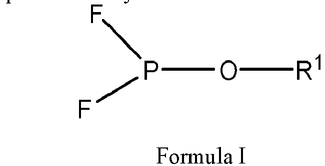 wherein,
R¹ is selected from the group consisting of a substituted or unsubstituted C₁-C₁₀ alkyl and a substituted or unsubstituted C₂-C₁₀ unsaturated hydrocarbyl, wherein the substituent, if present, is selected from the group consisting of alkanoyl, cyano, halogen, and combinations thereof; or
R¹ is a group represented by the following formula: 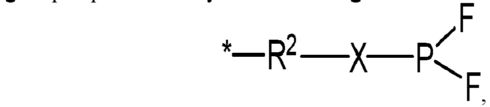 wherein
R² is selected from the group consisting of a single bond, a substituted or unsubstituted C₁-C₁₀ alkylene, and a substituted or unsubstituted C₂-C₁₀ unsaturated hydrocarbyl, wherein the substituent, if present, is halogen;
X is a single bond or an oxygen atom; and
* indicates a bonding position.

3. The electrolyte according to claim 1, wherein the compound containing (F)₂PO-comprises at least one of the following compounds:

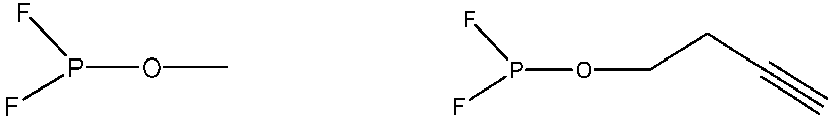

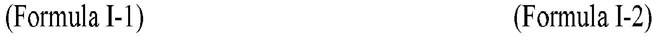

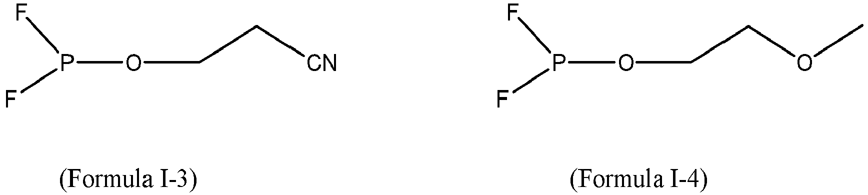

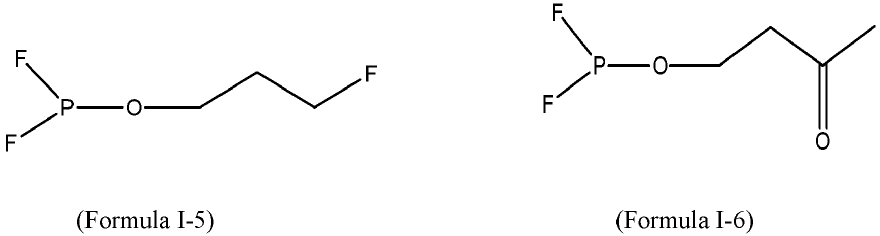

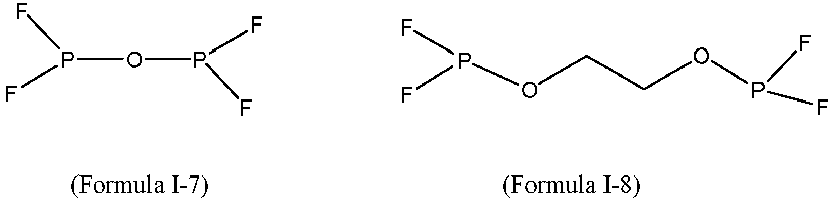

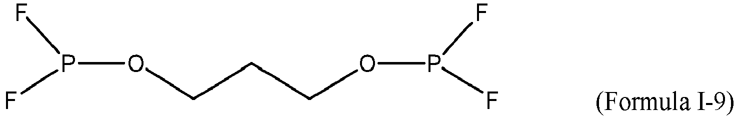

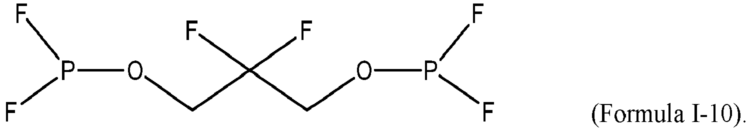

4. The electrolyte according to claim 1, wherein, based on a total mass of the electrolyte, a mass percentage of the compound containing (F)₂PO- in the electrolyte is 0.001% to 5%, and a mass content of the lithium difluorophosphate in the electrolyte is 0.001% to 1%.

5. The electrolyte according to claim 1, wherein, based on a total mass of the electrolyte, the mass percentage of the compound containing (F)₂PO- in the electrolyte is 0.1% to 1%, amass content of the lithium difluorophosphate in the electrolyte is 0.001% to 0.49%.

6. The electrolyte according to any one of claims 1-5, wherein the electrolyte further comprises at least one of a multiple-cyano compound, a sultone compound, and a fluoroether compound.

7. The electrolyte according to claim 6, wherein the multiple-cyano compound comprises at least one of the following compounds: 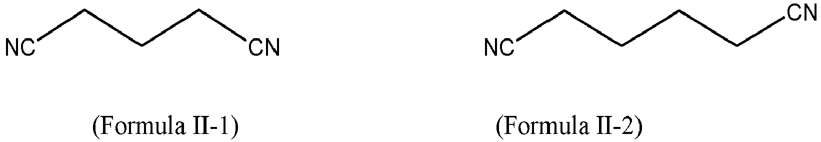 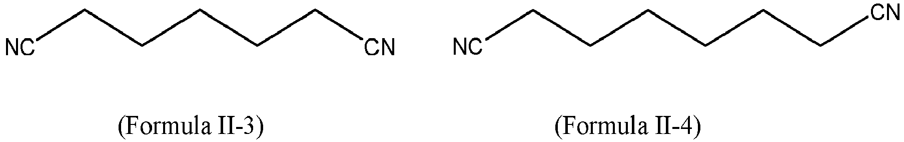 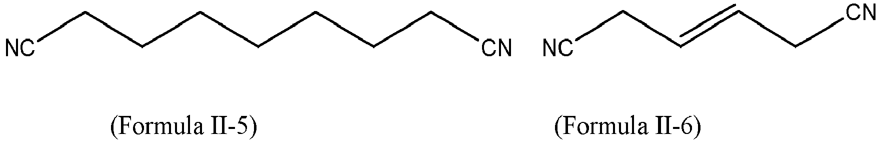 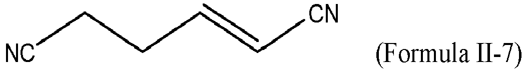 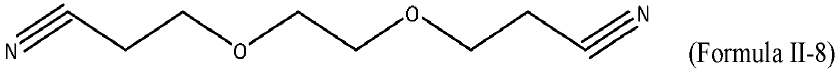 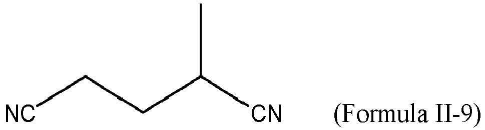 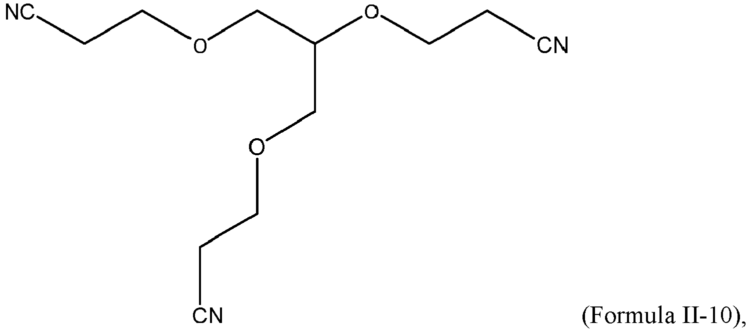 and
based on a total mass of the electrolyte, a mass percentage of the multiple-cyano compound in the electrolyte is 0.01% to 10%.

8. The electrolyte according to claim6, wherein the sultone compound has a structure represented by Formula III-A or Formula III-B: 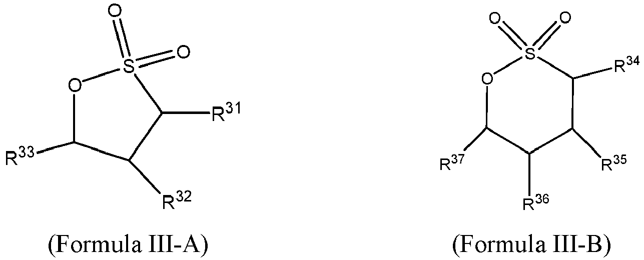 wherein,
R³¹, R³², R³³, R³⁴, R³⁵, R³⁶, and R³⁷ are each independently selected from the group consisting of H, F, Cl, Br, a substituted or unsubstituted C₁∼C₆ alkyl, and a substituted or unsubstituted C₂∼C₆ unsaturated hydrocarbyl, wherein the substituent, if present, is selected from the group consisting of F, Cl, and Br; and
based on a total mass of the electrolyte, a mass percentage of the sultone compound in the electrolyte is 0.01% to 10%.

9. The electrolyte according to claim 8, wherein the sultone compound has a structure represented by any one of the following formulas:

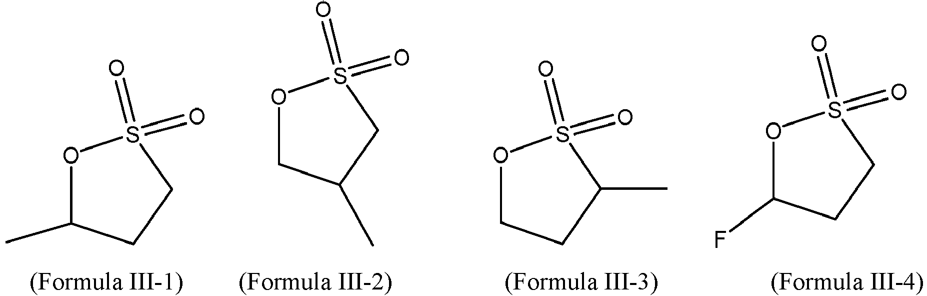

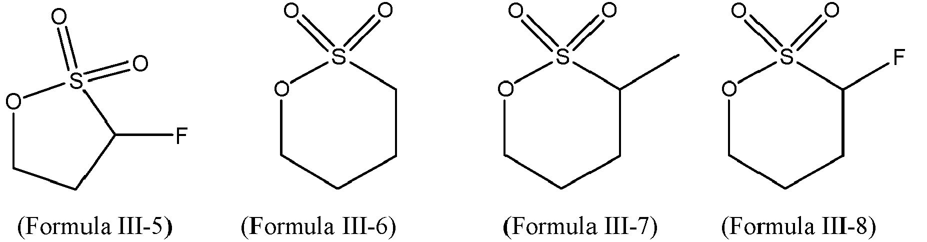

10. The electrolyte according to claim 6, wherein the fluoroether compound is selected from the group consisting of desflurane, sevoflurane, fluroxene, 2,2,2-trifluoroether, bis (fluoromethyl) ether, 2,2,3,3,3-pentafluoropropyl difluoromethyl ether, 2,2-difluoroethyl trifluoromethyl ether, 1,1,1,2,3,3-hexafluoro-3-(2,2,2-trifluoroethoxy)propane, heptafluoropropyl 1,2,2,2-tetrafluoroethyl ether, trifluoromethyl trifluorovinyl ether, 1,2,2,2-tetrafluoroethyl trifluoromethyl ether, 1,1,2,3,3,3-Hexafluoropropyl dichloromethyl ether, 1,2,2-trifluoroethyl trifluoromethyl ether, 2,2,3,3-tetrafluoropropyl difluoromethyl ether, difluoromethyl 2,2,2-trifluoroethyl ether, 1,1-difluorodimethyl ether, trifluoromethyl methyl ether, 1,1,2,2-tetrafluoroethyl ethyl ether, 1,1,2,3,3,3-hexafluoropropyl methyl ether, 1,1,3,3-tetrafluorodimethyl ether, bis(4-fluorobutyl) ether, ethyl trifluoromethyl ether, 2,2,3,3,3-pentafluoropropyl methyl ether, methyl nonafluorobutyl ether, 1,2,2,2-tetrafluoroethyl methyl ether, pentafluorodimethyl ether, 1,1,1,2,3,3-hexafluoropropyl ethyl ether, bis(2,2-difluoroethyl) ether, ethyl perfluorobutyl ether, bis(1,2,2,2-tetrafluoroethyl) ether, 1,1,2,2-tetrafluoroethyl methyl ether, 2-fluoroethyl methyl ether, perfluorobutyl methyl ether, ethyl nonafluorobutyl ether, 2-(perfluoropropoxy)perfluoropropyl trifluorovinyl ether, 1,1,1,3,3,3-hexafluoroisopropyl methyl ether, 2,2,3,3-tetrafluoropropyl-1',1',2',3',3'-hexafluoropropyl ether, perfluorodiglyme, 2,2-difluoroethyl methyl ether, pentafluoroethyl trifluorovinyl ether, heptafluoro-n-propyl trifluorovinyl ether, pentafluoroethyl trifluorovinyl ether, allyl 2,2,3,3-tetrafluoropropyl ether, 2,2,2-trifluoroethyl ethyl ether, perfluoro(3-butenylvinylether), and combinations thereof; and
a mass percentage of the fluoroether compound in the electrolyte is 0.1% to 20%, based on a total mass of the electrolyte.

11. The electrolyte according to claim 6, wherein a mass percentage of the fluoroether compound in the electrolyte is 0.5% to 10%, based on a total mass of the electrolyte.

12. An electrochemical device, comprising:
a positive electrode;
a negative electrode;
a separator disposed between the positive electrode and the negative electrode; and
the electrolyte according to any one of claims 1-11.

13. The electrochemical device according to claim 12, wherein the positive electrode comprises a positive current collector and a positive active material layer disposed on the positive current collector,
the positive active material layer comprises a positive active material containing magnesium element,
a content of the magnesium element is m×10³ ppm based on a total weight of the positive active material layer, and based on a total mass of the electrolyte, a mass percentage of the lithium difluorophosphate in the electrolyte is a% and a mass percentage of the compound containing (F)₂PO- in the electrolyte is b%, where m is in a range of 0.5 to 2, and (a+b)/m≤1.

14. An electronic apparatus, comprising the electrochemical device according to claim 12 or 13.

## Amended claims

### Amended claims in accordance with Rule 137(2) EPC.

1. An electrolyte, **characterized in that** the electrolyte comprises lithium difluorophosphate and a compound represented by Formula I: 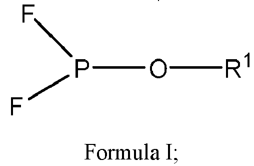 wherein,
R¹ is selected from the group consisting of a substituted or unsubstituted C₁-C₁₀ alkyl and a substituted or unsubstituted C₂-C₁₀ unsaturated hydrocarbyl, wherein the substituent, if present, is selected from the group consisting of alkanoyl, cyano, halogen, and combinations thereof; or
R¹ is a group represented by the following formula: 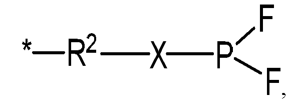 wherein
R² is selected from the group consisting of a single bond, a substituted or unsubstituted C₁-C₁₀ alkylene, and a substituted or unsubstituted C₂-C₁₀ unsaturated hydrocarbyl, wherein the substituent, if present, is halogen;
X is a single bond or an oxygen atom; and
* indicates a bonding position.

2. The electrolyte according to claim 1, wherein the compound containing (F)₂PO-comprises at least one of the following compounds:

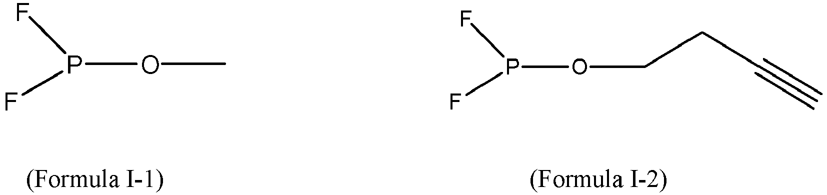

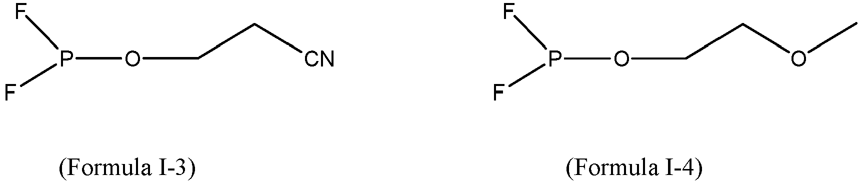

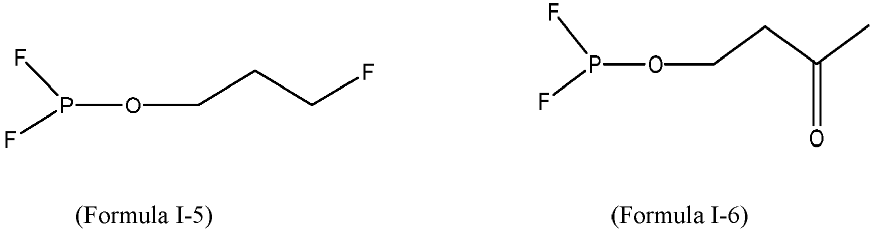

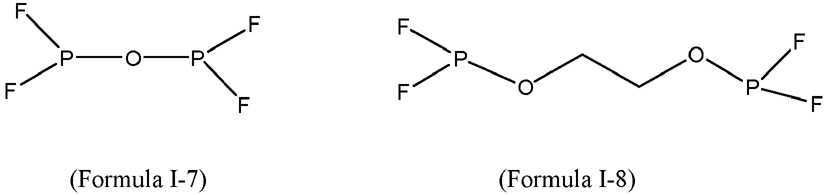

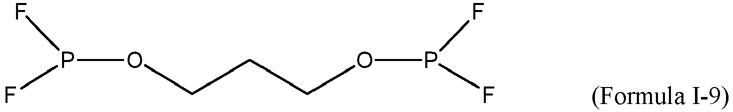

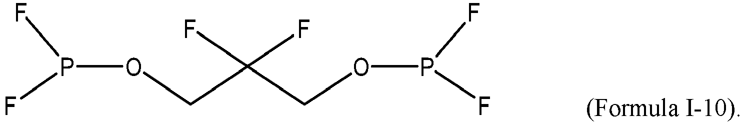

3. The electrolyte according to claim 1, wherein, based on a total mass of the electrolyte, a mass percentage of the compound containing (F)₂PO- in the electrolyte is 0.001% to 5%, and a mass content of the lithium difluorophosphate in the electrolyte is 0.001% to 1%.

4. The electrolyte according to claim 1, wherein, based on a total mass of the electrolyte, the mass percentage of the compound containing (F)₂PO- in the electrolyte is 0.1% to 1%, amass content of the lithium difluorophosphate in the electrolyte is 0.001% to 0.49%.

5. The electrolyte according to any one of claims 1-4, wherein the electrolyte further comprises at least one of a multiple-cyano compound, a sultone compound, and a fluoroether compound.

6. The electrolyte according to claim 5, wherein the multiple-cyano compound comprises at least one of the following compounds: 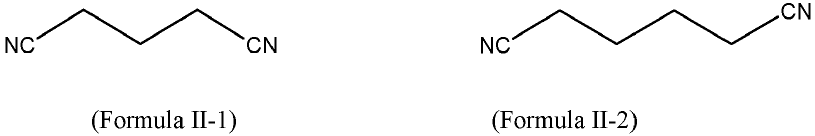 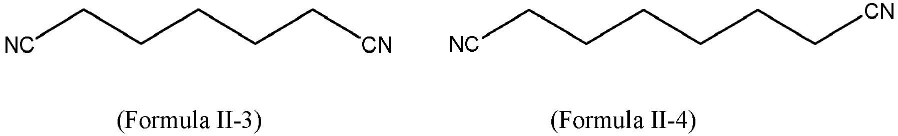 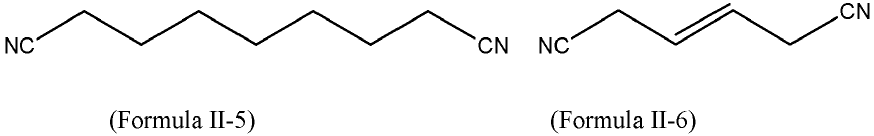 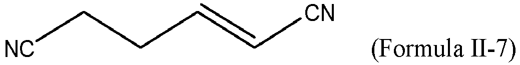 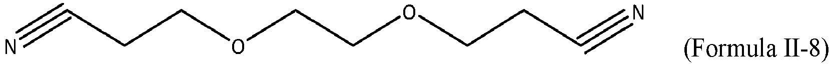 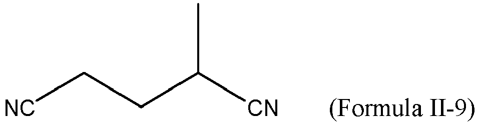 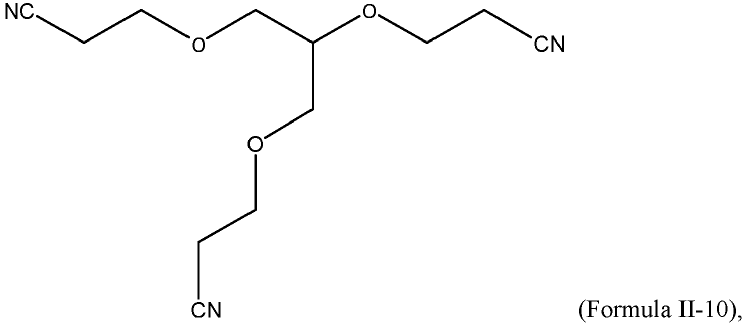 and
based on a total mass of the electrolyte, a mass percentage of the multiple-cyano compound in the electrolyte is 0.01% to 10%.

7. The electrolyte according to claim 5, wherein the sultone compound has a structure represented by Formula III-A or Formula III-B: 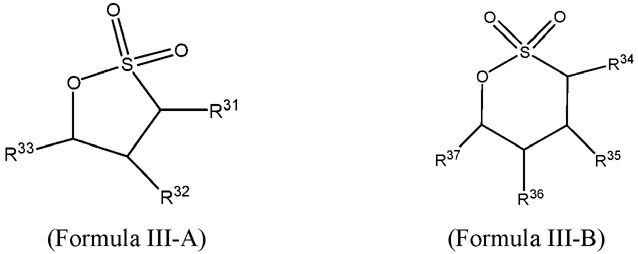 wherein,
R³¹, R³², R³³, R³⁴, R³⁵, R³⁶, and R³⁷ are each independently selected from the group consisting of H, F, Cl, Br, a substituted or unsubstituted C₁∼C₆ alkyl, and a substituted or unsubstituted C₂∼C₆ unsaturated hydrocarbyl, wherein the substituent, if present, is selected from the group consisting of F, Cl, and Br; and
based on a total mass of the electrolyte, a mass percentage of the sultone compound in the electrolyte is 0.01% to 10%.

8. The electrolyte according to claim 7, wherein the sultone compound has a structure represented by any one of the following formulas:

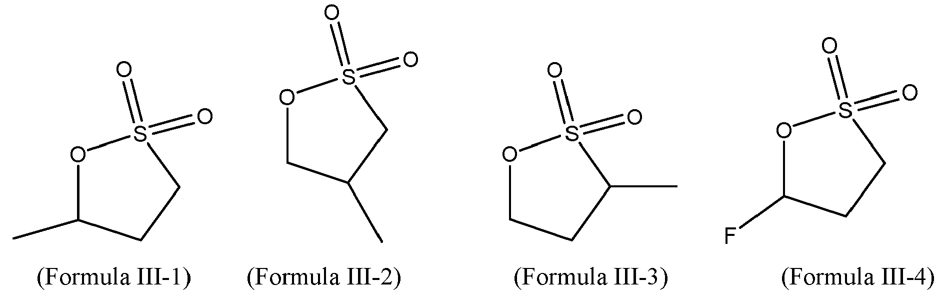

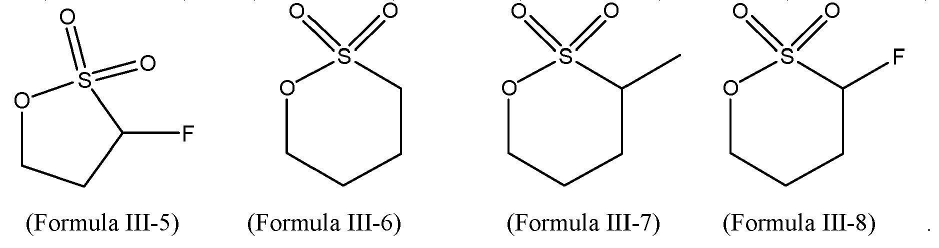

9. The electrolyte according to claim 5, wherein the fluoroether compound is selected from the group consisting of desflurane, sevoflurane, fluroxene, 2,2,2-trifluoroether, bis (fluoromethyl) ether, 2,2,3,3,3-pentafluoropropyl difluoromethyl ether, 2,2-difluoroethyl trifluoromethyl ether, 1,1,1,2,3,3-hexafluoro-3-(2,2,2-trifluoroethoxy)propane, heptafluoropropyl 1,2,2,2-tetrafluoroethyl ether, trifluoromethyl trifluorovinyl ether, 1,2,2,2-tetrafluoroethyl trifluoromethyl ether, 1,1,2,3,3,3-Hexafluoropropyl dichloromethyl ether, 1,2,2-trifluoroethyl trifluoromethyl ether, 2,2,3,3-tetrafluoropropyl difluoromethyl ether, difluoromethyl 2,2,2-trifluoroethyl ether, 1,1-difluorodimethyl ether, trifluoromethyl methyl ether, 1,1,2,2-tetrafluoroethyl ethyl ether, 1,1,2,3,3,3-hexafluoropropyl methyl ether, 1,1,3,3-tetrafluorodimethyl ether, bis(4-fluorobutyl) ether, ethyl trifluoromethyl ether, 2,2,3,3,3-pentafluoropropyl methyl ether, methyl nonafluorobutyl ether, 1,2,2,2-tetrafluoroethyl methyl ether, pentafluorodimethyl ether, 1,1,1,2,3,3-hexafluoropropyl ethyl ether, bis(2,2-difluoroethyl) ether, ethyl perfluorobutyl ether, bis(1,2,2,2-tetrafluoroethyl) ether, 1,1,2,2-tetrafluoroethyl methyl ether, 2-fluoroethyl methyl ether, perfluorobutyl methyl ether, ethyl nonafluorobutyl ether, 2-(perfluoropropoxy)perfluoropropyl trifluorovinyl ether, 1,1,1,3,3,3-hexafluoroisopropyl methyl ether, 2,2,3,3-tetrafluoropropyl-1',1',2',3',3'-hexafluoropropyl ether, perfluorodiglyme, 2,2-difluoroethyl methyl ether, pentafluoroethyl trifluorovinyl ether, heptafluoro-n-propyl trifluorovinyl ether, pentafluoroethyl trifluorovinyl ether, allyl 2,2,3,3-tetrafluoropropyl ether, 2,2,2-trifluoroethyl ethyl ether, perfluoro(3-butenylvinylether), and combinations thereof; and
a mass percentage of the fluoroether compound in the electrolyte is 0.1% to 20%, based on a total mass of the electrolyte.

10. The electrolyte according to claim 5, wherein a mass percentage of the fluoroether compound in the electrolyte is 0.5% to 10%, based on a total mass of the electrolyte.

11. An electrochemical device, comprising:
a positive electrode;
a negative electrode;
a separator disposed between the positive electrode and the negative electrode; and
the electrolyte according to any one of claims 1-10.

12. The electrochemical device according to claim 11, wherein the positive electrode comprises a positive current collector and a positive active material layer disposed on the positive current collector,
the positive active material layer comprises a positive active material containing magnesium element,
a content of the magnesium element is mx 10³ ppm based on a total weight of the positive active material layer, and based on a total mass of the electrolyte, a mass percentage of the lithium difluorophosphate in the electrolyte is a% and a mass percentage of the compound containing (F)₂PO- in the electrolyte is b%, where m is in a range of 0.5 to 2, and (a+b)/m≤1.

13. An electronic apparatus, comprising the electrochemical device according to claim 11 or 12.
